# EUROPÄISCHE PATENTANMELDUNG

(11) **EP 4 574 377 A1**
(43) Veröffentlichungstag der Anmeldung: **25.06.2025**
(21) Anmeldenummer: 23219151.0
(22) Anmeldetag: 21.12.2023
(51) Int. Cl.: B29B 17/02, B32B 43/00, B29L 9/00, B29L 31/30, B29L 31/00

(54) **SEPARIEREN VON FLÄCHIGEN, GLAS- UND KUNSTSTOFFLAGEN ENTHALTENEN VERBUNDELEMENTEN**

(71) Anmelder: Heinz Schirmacher GmbH, 22946 Trittau (DE)
(72) Erfinder: KUNTSCHMANN, Sven, 22397 Hamburg (DE)
(74) Vertreter: Raffay & Fleck

(57) **Zusammenfassung**

Ein Verfahren zum Separieren von in scheibenförmigen Elementen verbundenen Lagen aus Glas (1) und Kunststoff (2), zeichnet sich dadurch aus, dass mittels einer gegenüber einer Glasoberfläche eines scheibenförmigen Elements mit darin verbundenen, zu separierenden Lagen aus Glas (1) und Kunststoff (2) angeordneten, leisten-, stab- oder balkenförmigen Elektrode (5) ein hochfrequentes elektromagnetisches Feld (HF) in Richtung des scheibenförmigen Elements abgestrahlt wird und dass die Elektrode (5) und das scheibenförmige Element in einer solche Weise in einer Verfahrrichtung (V) relativ zueinander bewegt werden, dass die Oberfläche einer flächigen Seite des scheibenförmigen Elements von dem hochfrequenten elektromagnetischen Feld in der Verfahrrichtung (V) während der ausgeführten Relativbewegung zwischen der Elektrode (5) und dem scheibenförmigen Element überstrichen wird, wobei das hochfrequente elektromagnetische Feld hinsichtlich der Frequenz und Energiedichte derart gewählt ist, dass von dem hochfrequenten elektromagnetischen Feld getragene Energie in einer Kunststofflage (2) des scheibenförmigen Elements in Wärme umgesetzt wird und den Kunststoff in dieser Lage erhitzt und verdampft.

## Beschreibung

Die Erfindung betrifft ein Verfahren zum Separieren von in scheibenförmigen Elementen verbundenen Lagen aus Glas und Kunststoff. Sie betrifft ferner eine Vorrichtung zur Durchführung eines solchen Verfahrens.

Es ist bekannt, für Verbundelemente aus Glas und Kunststoff zum Zwecke des Recyclings die in den Verbundelementen miteinander verbundenen Schichten aus Glas und Kunststoff zu trennen, insbesondere um das Glas zurückzugewinnen und für die Herstellung neuer Glasbauteile als Rohstoff verwenden zu können.

In den bekannten Trennverfahren werden zwei Herangehensweisen eingesetzt: So ist eine rein mechanische Trennung bekannt, bei der das Glas gebrochen und so zerkleinert wird und bei der der Glasbruch von der Kunststoffschicht, in der Regel einer Kunststofffolie, mechanisch abgetrennt wird. Ein Beispiel für ein solches Verfahren ist in der DE 42 00 751 A1 offenbart. Bei dem dort offenbarten Vorgehen wird eine Verbundglasscheibe durch einen Walzenspalt eines rotierenden Zahnwalzenpaars geführt und werden dabei die Glasscheiben gebrochen. Mit einem Paar aus rotierenden Bürsten werden die Glasscherben und -splitter von der Kunststofffolie abgebürstet. Die so anfallenden Glasscherben und -splitter werden aufgefangen und gesammelt, um sie einem Recycling zuzuführen.

In der EP 2 040 842 B1 ist eine abweichende Variante eines rein mechanischen Trennverfahrens für Verbundglas offenbart, bei dem in einem Zerkleinerungsschritt nicht nur die Glasschichten, sondern auch die Kunststoffschicht zerkleinert und der Kunststoff dann durch mechanisches Einwirken von den Glaspartikeln gelöst wird und anschließend durch Einströmen von Luft die Kunststoffreste von den Glaspartikeln separiert werden.

Weitere bekannte Trennverfahren sehen eine Kombination aus mechanischer Zerkleinerung des Verbundelements und einer anschließenden Trennung mithilfe chemischer Behandlung vor. Solche Vorgehensweisen sind z.B. in den Veröffentlichungen DE 698 24 595 T2, EP 1 950 019 B1 und EP 3 140 093 B1 beschrieben.

Neben einer Anwendung für Verbundglas, insbesondere Verbundsicherheitsglas, aber auch für Einscheibensicherheitsglas ist ein Separieren von Glaselementen und Kunststoff- und ggf. auch weiteren Elementen auch für ein Recycling von Photovoltaikmodulen relevant. Gerade für solche Module ist ein Rückgewinnen des darin verbauten Glases von besonderem Interesse, da das in solchen Modulen eingesetzte Solar-Glas aufgrund seines signifikant geringeren Eisenanteils deutlich höherwertiger als normales Flachglas ist.

Mit den aus dem Stand der Technik bekannten Verfahren ist eine saubere und weitgehend rückstandsfreie Trennung von Glasscheiben und Kunststofflagen, insbesondere -folien, für scheibenförmige Verbundelemente, wie Verbundglas oder Photovoltaikmodule, nicht möglich. So verbleiben bei einer rein mechanischen Trennung Kunststoffreste, im Besonderen Folienreste, an den abgetrennten, gebrochenen Glaspartikeln. Diese verunreinigen das Glas, sodass Recycling zu einem hochwertigen und fremdstofffreien, jedenfalls fremdstoffarmen, Glasprodukt nicht möglich ist. Auch eine kombinierte mechanische und chemische Trennung führt zu Verunreinigungsproblemen des erhaltenen Glasmaterials. Insbesondere die große Oberfläche des chemisch behandelten Glasbruchs führt zu einer signifikanten Anlagerung von residualen Verunreinigungen, die sich nicht ohne weiteres ablösen lassen und die zu den vorerwähnten Problemen hinsichtlich eines Einsatzes des so gewonnenen Glasmaterials für die Herstellung von hochwertigen, fremdstofffreien, jedenfalls fremdstoffarmen, Glasprodukten führen.

Vor dem Hintergrund des Vorstehenden haben die Erfinder sich zum Ziel gesetzt, ein Separieren von in scheibenförmigen Elementen verbundenen Lagen aus Glas und Kunststoff zu ermöglichen, das insbesondere eine Trennung der Lagen ohne eine mechanische Zerkleinerung des Verbundteils, insbesondere des Glases in dem Verbundteil, ermöglicht und das es dadurch erlaubt, am Ende des Trennprozesses abgetrennte Glaslagen zu erhalten, die nach Möglichkeit keine anhaftenden Verunreinigungen aufweisen, solche Verunreinigungen jedenfalls nur in einem geringen Anteil bezogen auf die Masse an abgetrenntem Glasmaterial enthalten.

Diese Aufgabe wir erfindungsgemäß gelöst durch ein Verfahren zum Separieren von in scheibenförmigen Elementen verbundenen Lagen aus Glas und Kunststoff mit den Merkmalen des Anspruchs 1. Ein weiterer Aspekt der Lösung dieser Aufgabe liegt in einer Vorrichtung zum Durchführen eines solchen Verfahrens zum Separieren von in scheibenförmigen Elementen verbundenen Lagen aus Glas und Kunststoff mit den Merkmalen des Anspruchs 12. Vorteilhafte Weiterbildungen des erfindungsgemäßen Verfahrens sind in den Ansprüchen 2 bis 11 bezeichnet.

Mit einem erfindungsgemäßen Verfahren können bei einem scheibenförmigen Element, in dem Lagen aus Glas und Kunststoff miteinander verbunden sind, z.B. zwei Glaslagen mit einer dazwischen angeordneten, die Glaslagen verbindenden Kunststoffschicht, bspw. in Form einer Verbundglasscheibe, oder auch eine ein Photovoltaikmodul abdeckende Glasscheibe von darunter befindlichen Schichten, wie etwa eine Aluminiumlage und eine letztere mit der Glasscheibe verbindende Kunststofflage, die verbundenen Lagen aus Glas und Kunststoff getrennt werden, um insbesondere die Glaslagen, insbesondere als Glasscheiben für ein Recyclen zurückzugewinnen. Dies kann insbesondere erfolgen, ohne eine mechanische Zerkleinerung der Glaslagen vor oder während des Trennvorganges. Hierzu wird erfindungsgemäß ein hochfrequentes elektromagnetisches Feld (HF) gerichtet in Richtung des scheibenförmigen Elements abgestrahlt, wobei dies insbesondere mittels einer dem scheibenförmigen Element gegenüberliegend angeordneten leisten-, stab- oder balkenförmigen Elektrode oder einer solchen Elektrodenanordnung erfolgen kann. Der Einfachheit halber wird nachfolgend der Begriff "Elektrode" verwendet, wobei damit sowohl eine zusammenhängende Elektrode ebenso gemeint ist wie eine Elektrodenanordnung mit mehreren, insbesondere nebeneinander angeordneten, Einzelelektroden.

Unter einem hochfrequenten elektromagnetischen Feld, auch als HF bezeichnet, wird hier ein elektromagnetisches Wechselfeld in einem Frequenzbereich von 1 MHz bis 100 MHz verstanden. Zwischen der vorzugsweise verwendeten Elektrode und dem scheibenförmigen Element wird dann insbesondere eine solche Relativbewegung in einer Verfahrrichtung initiiert, dass infolge dieser Relativbewegung die Oberfläche einer flächigen Seite des scheibenförmigen Elements von der hochfrequenten elektromagnetischen Strahlung überstrichen wird, insbesondere vollständig überstrichen wird. Diese Relativbewegung zwischen der Elektrode und dem scheibenförmigen Element kann erzielt werden, indem die Elektrode und/oder das scheibenförmige Element bewegt wird, bzw. bewegt werden. Für den Erfolg des Verfahrens ist es nicht von Belang, welches der beteiligten Elemente aktiv bewegt wird. Es kommt allein auf eine erzeugte Relativbewegung an. Das hochfrequente elektromagnetische Feld ist dabei hinsichtlich seiner Frequenz und Energiedichte derart gewählt, dass von diesem hochfrequenten elektromagnetischen Feld getragene Energie in einer Kunststofflage des scheibenförmigen Elements aufgenommen und in Wärme umgesetzt wird und den Kunststoff in dieser Lage so erhitzt und verdampft.

Bei dem hier vorgeschlagenen, erfindungsgemäßen Verfahren wird, anders als im Stand der Technik, die Trennung des als Verbundteil aus Glas und Kunststoff gebildeten scheibenförmigen Elements weder mechanisch, noch chemisch realisiert. Vielmehr wird hier ein thermischer Ansatz verfolgt, bei dem die Kunststofflage oder auch, sofern vorhanden, mehrere Kunststofflagen, thermisch aufgelöst wird, bzw. werden. Der Kunststoff wird soweit erhitzt, dass er verdampft, wobei im Rahmen der Erfindung bei diesem Prozess ggf. auch eine thermische Zersetzung des Kunststoffs mit einhergehen kann. Der Kunststoff wird also bei dem erfindungsgemäßen Trennverfahren nicht primär als solcher erhalten und zurückgewonnen. Das Verfahren fokussiert vielmehr auf die Rückgewinnung der Glasbestandteile des Verbundelements, insbesondere der einen oder mehreren darin enthaltenen Glasscheiben. Diese können bei einer entsprechenden Durchführung des Verfahrens insbesondere zerstörungsfrei aus dem Verbundteil abgetrennt und so erhalten werden. Hierin liegt auch ein besonderer Vorteil des Verfahrens, das eine besonders rückstandsfreie Abtrennung und Isolierung der in dem scheibenförmigen Verbundelement enthaltenen Glaselemente ermöglicht. Denn zum einen kann durch das thermische Abtrennen des Kunststoffs, z.B. einer Polyvinylbutyralfolie (PVB-Folie), wie sie häufig und typisch in Verbundglas zwischen zwei Glasscheiben angeordnet ist, dieser Kunststoff sehr sauber von den Glaselementen abgetrennt werden. Weiterhin wird, sofern gleichwohl Reste des abgetrennten Kunststoffs an der Glasoberfläche haften bleiben, dies nur an der dem Kunststoff gegenüber exponierten Fläche des Glaselements oder der Glaselemente erfolgen, nicht jedoch über die gesamten Oberflächen von Bruchstücken der in den bekannten Trennverfahren typischerweise zunächst zerkleinerten Glaselemente. Solche Bruchstücke bieten im Vergleich zu einem intakten, scheibenförmigen Glaselement, bei dem zudem in der Regel nur eine der ausgedehnten Oberflächen gegenüber dem Kunststoff exponiert ist, eine um ein Vielfaches größere Fläche, so dass dort, also bei den Bruchstücken, weit größere Mengen an Verunreinigungen anhaften können. Im Übrigen kann ein intaktes scheibenförmiges Glaselement von etwaig anhaftenden Fremdstoffen in einem etwaigen nachgelagerten Reinigungsschrift weit einfacher befreit und gereinigt werden, als dies für die Partikel von Bruchglas möglich ist. Auch wenn es in dem Verfahren primär um die Rückgewinnung der Glasscheiben geht, können gleichwohl auch die Bestanteile des Kunststoffs, z.B. bei dessen thermischer Zersetzung entstehende Essigsäuren, aufgefangen und ebenfalls einer weiteren Nutzung zugeführt werden.

Für das Erhitzen und Verdampfen des Kunststoffs in den scheibenförmigen Elementen mit dem Glas-Kunststoff-Verbund wird der dielektrische Verlustfaktor des Kunststoffs ausgenutzt. Dieser führt dazu, dass in der Folie die eingestrahlte Energie aus dem HF absorbiert wird und zu einer Wärmeentwicklung führt. Insbesondere ist es mit einem solchen Vorgehen auch möglich Temperaturen von z.B. 300°C - 400°C in dem Kunststoff zu erreichen, die für einige der hier zu betrachtenden Kunststoffe erreicht werden müssen, um die Verdampfung zu erhalten.

Um die Einwirkung des mit der Elektrode eingebrachten HF auf den Kunststoff möglichst effizient zu erhalten, kann die Elektrode so gebildet und eingerichtet sein, dass das HF gezielt in einer schmalen Linie oder einem Streifen von begrenzter Breite direkt in Richtung der Oberfläche des scheibenförmigen Elements, insbesondere senkrecht zu dieser Oberfläche, abgestrahlt wird. Hierfür können auch Leit- oder Fokussiermittel in der Elektrode vorgesehen sein, die das HF entsprechend richten und/oder bündeln.

Für die Durchführung des erfindungsgemäßen Verfahrens wird derzeit die Verwendung eines HF mit einer Frequenz im Bereich von 10 bis 50 MHz, insbesondere im Bereich von 20 bis 35 MHz, bevorzugt. Mit einem HF in diesem Frequenzbereich konnten die Erfinder in durchgeführten Vergleichsversuchen gute Ergebnisse erzielen. Weiterhin wird für die Durchführung des erfindungsgemäßen Verfahrens derzeit die Verwendung eines HF mit einer Energiedichte von 5 bis 20 kW/cm², insbesondere im Bereich von 10 bis 15 kW/cm², bevorzugt. Auch hier konnten die Erfinder mit in diesem Bereich eingestellten Energiedichten besonders gute Ergebnisse erzielen. Es ist an dieser Stelle aber auch darauf zu verweisen, dass die zu wählende Energiedichte von baulichen Gegebenheiten der für die Durchführung des Verfahrens verwendeten Vorrichtung ebenso abhängt wie von Eigenschaften der für die Abtrennung der Glasbestandteile zu behandelnden, scheibenförmigen Elementen. So hat z.B. die Dicke einer außenliegenden, eine Kunststofflage überdeckenden Glaslage einen Einfluss auf die einzustellende Energiedichte des HF (bzw. der Leistung der Elektrode), da beim Durchdringen der Glaslage bereits ein Teil der in dem HF mitgeführten Energie absorbiert wird, dieser Teil umso größer ist, je dicker die Glasschicht ist. Hier ist eine solche Energiedichte zu wählen, dass weiterhin ausreichend Energie in der Kunststofflage anlangt, um diese bis auf die für ein Verdampfen zu erreichenden Temperaturen zu erhitzen.

Damit bei der Durchführung des Verfahrens die zu verdampfende Kunststofflage über ihre gesamte Breite behandelt werden, der Kunststoff über diese gesamte Breite zum Verdampfen gebracht werden kann, wird bevorzugt, dass die Elektrode eine Länge aufweist, die mindestens einer quer, insbesondere senkrecht, zu der Relativbewegung verlaufenden Breite des scheibenförmigen Elements entspricht oder diese Breite übersteigt.

Weiterhin wird bevorzugt, dass bei einer Durchführung des erfindungsgemäßen Verfahrens die Relativbewegung zwischen der Elektrode und dem scheibenförmigen Element ausgehend von einem Rand des scheibenförmigen Elements beginnt. Auf diese Weise kann zunächst vom Rande des scheibenförmigen Elements her der Prozess des Verdampfens des Kunststoffs eingeleitet werden, so dass insbesondere für Verbundelemente, bei denen die Kunststofflage zwischen zwei Lagen, z.B. zwei Glaslagen oder einer Stützlage, z.B. aus Metall, und einer Glaslage, angeordnet ist, das entstehende Gas sicher aus dem spaltförmigen Zwischenraum entweichen kann und nicht etwa aufgrund einer eingeschlossenen Expansion zu einem Glasbruch in einer oder beiden angrenzenden Glaslage(n) führt.

Für ein effizientes Einleiten der von dem HF getragenen Energie in das Kunststoffmaterial und für ein effizientes Verdampfen des Kunststoffs kann es von Vorteil sein, wenn das Kunststoffmaterial vor dem Einwirken mit dem hochfrequenten elektromagnetischen Feld vorerwärmt wird. So kann sich insbesondere der dielektrische Verlustfaktor des Kunststoffs temperaturabhängig verändern, sich dabei bei einer bereits erhöhten Temperatur so entwickeln, dass das anschließend aufgebrachte HF besonders gut wirkt. Eine solche Vorerwärmung der Kunststofflage kann z.B. durch ein herkömmliches Erwärmen erhalten werden, z.B. mittels eines Wärmemediums, wie etwas erwärmter Luft oder einer erwärmten Flüssigkeit. Es kann eine solche Vorerwärmung aber insbesondere auch durch eine besondere Bauform der verwendeten Elektrode erreicht werden. Die HF-Elektrode kann z.B. mit einer angeschrägten Form, einer schräg sich in der Verfahrrichtung öffnenden Vorderkante, versehen sein. Eine solche Bauform lässt einen Teil des mit der Elektrode erzeugten hochfrequenten elektromagnetischen Feldes, der eine verglichen mit dem in Richtung der Oberfläche des scheibenförmigen Elements direkt gerichteten Feld geringere Feldstärke aufweist, also entsprechend weniger Energie trägt, in einem Bereich vor der Einwirkzone des energiereichen HF auf das scheibenförmige Element treffen und kann so eine Vorerwärmung des Kunststoffs in diesem Bereich bewirken.

Um in einem Übergangsbereich am Rand des scheibenförmigen Elements bei der Einwirkung mit dem HF keine oder nur eine geringe Fehlanpassung entstehen zu lassen, kann der Kunststoff mit Vorteil umlaufend an den Rändern mittels einer Streufeldelektrodenanordnung vorverdampft werden, wobei dann die eigentliche HF-Elektrode bei Beginn des Verdampfungsprozesses gegenüber der Oberfläche des scheibenförmigen Elements angeordnet steht und die restliche Kunststofflage verdampft. Die Streufeldelektrodenanordnung kann insbesondere seitlich um das scheibenförmige Element herum angeordnet sein und von dort aus jeweils in Richtung der Kanten des scheibenförmigen Elements wirken.

Um eine Änderung des dielektrischen Verlustfaktors des Kunststoffs währenddessen Erwärmung und während eines zu erwartenden ungleichmäßigen Verdampfens der Kunststofflage zu kompensieren und weiterhin mit einer bestmöglichen, resonanzbedingten Wirkung des HF und Umsetzung in Wärme eine effektive Erwärmung des Kunststoffs zu erhalten, kann in dem Verfahren vorgesehen sein, dass eine dynamische Frequenzanpassung der von des Elektrode erzeugten hochfrequenten elektromagnetischen Felds vorgenommen wird, und zwar derart, dass in dem Kunststoff, auf den das hochfrequente elektromagnetische Feld einwirkt, die von dem hochfrequenten elektromagnetischen Feld getragene Energie effizient in Wärme umgesetzt wird. Eine solche dynamische Frequenzanpassung und ein hierfür eingesetztes Anpass-Netzwerk muss anhand des Stehwellenverhältnisses auf die Änderungen des dielektrischen Verlustfaktors sprunghaft reagieren können, um den Verdampfungsprozess am Laufen zu halten. Die Frequenzanpassung kann dabei gemäß der Erfindung mit einer in einer Anpassung zwischen Elektrode und Generator angeordneten, angetrieben automatisch verstellbaren Kapazität erfolgen. Zusätzlich können über weitere Antriebe zusätzliche Kapazitäten oder Induktivitäten zur Anpassung zu- bzw. weggeschalten werden.

Die Erwärmung des Kunststoffs in der Kunststofflage hängt vom dielektrischen Verlustfaktor des spezifischen Kunststoffs ab, der wiederum von der Temperatur und der Frequenz beeinflusst wird. Um ein scheibenförmiges Element mit einer bestimmten Bauform und einem bestimmten Kunststoffmaterial in der oder den Kunststofflage(n) mit dem erfindungsgemäßen Verfahren für eine Abtrennung der Glaslagen behandeln zu können, wird das Element, wird insbesondere der Kunststoff in der Kunststofflage, für die Verdampfung in Vorversuchen einer Frequenz (einem Frequenzband) und einer Umgebungstemperatur auszusetzen sein, um die genauen Prozessparameter für eine Erwärmung bis hin zur Verdampfung des Kunststoffs zu bestimmen und für die eigentliche Behandlung einzustellen. Sofern über ausreichend Kenntnis der zu trennenden Materialien und über entsprechende Erfahrungswerte verfügt wird, kann die Einstellung auch basierend auf solchen Erfahrungswerten direkt vorgenommen werden.

Da die durch das Verdampfen des Kunststoffmaterials freigesetzten Gase umweltschädlich und/oder toxisch sein können, können diese mit Vorteil in dem Verfahren abgesaugt werden. Die so abgesaugten Gase können insbesondere einer Nachbehandlung unterzogen werden, um umweltschädliche und/oder gesundheitsgefährdende Komponenten zu entfernen oder durch die Nachbehandlung unschädlich zu machen.

Um bei der Verdampfung des Kunststoffmaterials und bei den hierfür zu erreichenden Temperaturen, die bspw. in einem Bereich von 300°C - 400°C liegen können, auftretende Spannungsrisse in dem Glasmaterial zu vermeiden, kann es erforderlich, jedenfalls von Vorteil sein, die Glaslagen auf ein unkritisches Temperaturniveau zu bringen und bei einer solchen Temperatur zu halten. Entsprechend kann das scheibenförmige Element während der Durchführung des Verfahrens temperiert werden. Dies kann z.B. dadurch geschehen, dass das zu bearbeitende scheibenförmige Element in einem Wasserbad gelagert ist. Um Verunreinigungen des abzutrennenden Glasmaterials zu vermeiden, sollte das Wasser in dem Bad deionisiertes Wasser sein und sollte zudem das deionisierte Wasser während des laufenden Trennprozesses einer, vorzugsweise kontinuierlichen, Reinigung unterzogen werden, um so Rückstände des verdampften Kunststoffs aus dem Wasserbad zu entfernen, bevor sich diese auf den Glaselementen absetzen und dort zu unerwünschten Verunreinigungen führen können. Die Bearbeitung des scheibenförmigen Elements in einem Wasserbad aus deionisiertem Wasser hat auch den Vorteil, dass in einer solchen Anordnung das hochfrequente elektromagnetische Feld besonders gut eingekoppelt werden kann.

Aus Gründen des Arbeitsschutzes und für eine EMV- und TREMF-sicherere Anwendung sollte das Verfahren vorzugsweise in einem für die eingesetzte Hochfrequenz faradaysch wirkenden Raum durchgeführt werden.

Wenn mit dem erfindungsgemäßen Verfahren scheibenförmige Elemente zum Trennen behandelt werden, die aus zwei mit einer zwischengelegten Kunststofflage verbundenen Glaslagen bestehen, wie z.B. Verbundglas, oder auch für ein Behandeln von Solar- bzw. Photovoltaikmodulen, kann es notwendig sein, nach Beendigung des Verdampfungsprozess die beiden Lagen, z.B. zwei Glaslagen oder auch eine Glaslage und eine Stütz- oder Trägerlage aus einem anderen Material, wie z.B. einem Metall, etwa Aluminium, noch einmal mechanisch voneinander zu trennen. Dies kann in einer liegenden oder stehen Position erfolgen. Für diesen Schritt kann z.B. ein keilförmiges Trennelement, wie z.B. eine Klinge oder ähnliches, eingesetzt werden, wobei dieses Trennelement in den Spalt zwischen den Glaslagen eingebracht wird und die beiden Lagen so voneinander abhebt. Es kann aber auch eine Trennung mit einem Wasserstrahl erfolgen, was den zusätzlichen Vorteil mit sich bringt, dass hierbei zugleich auch noch eine Reinigung der Glasoberfläche von etwa anhaftenden Resten des Kunststoffs bzw. dessen Zersetzungsprodukte gereinigt wird.

Für eine weitere Säuberung können nach dem erfindungsgemäßen Trennverfahren die separierten Glaslagen noch einmal von etwa noch anhaftenden Restpartikeln und -molekülen gereinigt werden, z.B. mit einem Hochdruckwasserstrahl.

Eine Vorrichtung zum Durchführen eines wie vorstehend beschriebenen Verfahrens kann eine Auflage für ein scheibenförmiges Element mit zu separierenden Lagen aus Glas und Kunststoff und eine, insbesondere leisten- stab- oder balkenförmige, Elektrode zum Abstrahlen eines hochfrequenten elektromagnetischen Felds (HF) aufweisen. Sie kann weiterhin einen an die Elektrode angeschlossenen Generator zum Erzeugen einer hochfrequenten Wechselspannung, aus der die Elektrode das hochfrequente elektromagnetische Feld erzeugt umfassen. Ferner kann sie eine antreibbare Einrichtung aufweisen zum relativen Bewegen der Auflage und der Elektrode zueinander in einer quer, insbesondere senkrecht, zu einer Längserstreckung der Elektrode verlaufenden Verfahrrichtung.

Weitere Vorteile und Merkmale der Erfindung und ihrer möglichen vorteilhaften Ausführungsformen ergeben sich aus der nachstehenden Beschreibung eines Ausführungsbeispiels anhand der beigefügten schematischen Figuren. Dabei zeigen:
- Fig. 1: schematisch in einer geschnittenen Seitenansicht eine Anordnung zur illustrativen Erläuterung des erfindungsgemäßen Verfahrens und des konzeptionellen Aufbaus einer möglichen Vorrichtung zur Durchführung des Verfahrens;
- Fig. 2: schematisch eine Aufsicht auf die Anordnung gemäß Fig. 1; und
- Fig. 3: schematisch in einer geschnittenen Seitenansicht eine alternative Anordnung, in der ein erfindungsgemäßes Verfahren mit einer alternativ gestalteten Vorrichtung durchgeführt werden kann.

Die beigefügten Figuren stellen reine Schemadarstellungen dar und sind weder als konstruktiv vollständig noch als maßstabsgerecht zu verstehen. Es handelt sich vielmehr um Prinzipskizzen, die die wesentlichen Grundprinzipien der Erfindung verdeutlichen und zusammen mit der nachstehenden Beschreibung einer nochmaligen Erläuterung und Veranschaulichung der Erfindung dienen sollen.

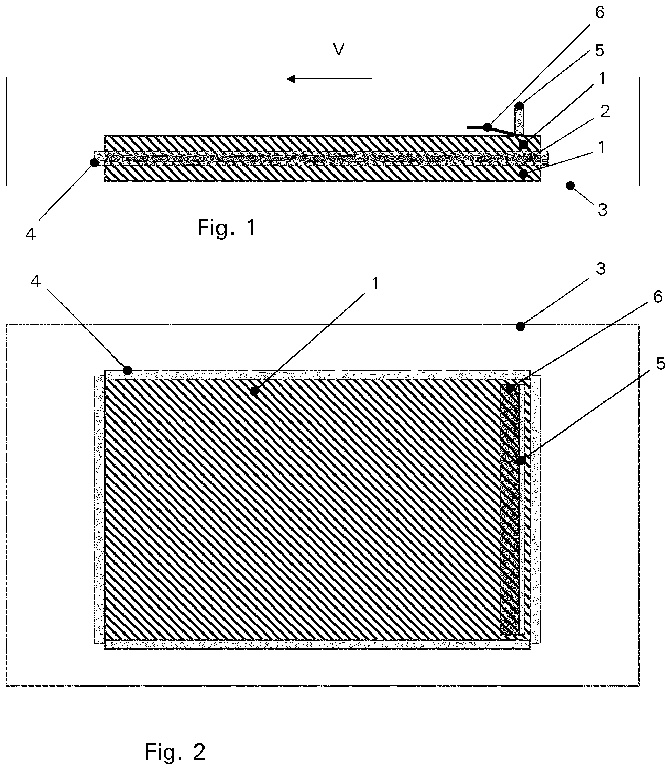

In den Figuren 1 und 2 ist eine Anordnung dargestellt, mit der ein erfindungsgemäßes Verfahren zum Trennen von scheibenförmigen Verbundelementen mit mindestens einer Glas- und mindestens einer Kunststofflage durchgeführt werden kann.

In den Figuren 1 und 2 ist dabei als ein scheibenförmiges Verbundelement ein solches mit zwei Glasscheiben 1 und einer dazwischen angeordneten Kunststofffolie 2 dargestellt. Es kann sich hierbei insoweit insbesondere um ein Verbundglas oder auch ein Verbundsicherheitsglas handeln, das aus den Glasscheiben 1 und der Kunststofffolie 2 durch Laminieren gebildet ist.

Um dieses Verbundelement nun zu trennen und insbesondere die Glasscheiben 1 abgetrennt von der Kunststofffolie 2 zu gewinnen, ist das Verbundelement, in dieser Ausführungsvariante plan liegend, in einer Einfassung 3 eingebracht, bei der sich um z.B. um ein Becken handeln kann, und die zudem einen faradayschen Abschluss bewirken kann. Das Verbundelement kann dabei insbesondere auf einer hier nicht näher gezeigten Ablage aufgelegt sein.

Oberhalb einer obenliegenden Oberfläche einer der Glasscheiben 1 ist eine HF-Elektrode 5 angeordnet. Diese ist hier als eine durchgehende Elektrode gezeigt. Sie kann aber auch durch zwei oder mehr Einzelelektroden kombiniert als eine Elektrodenanordnung gebildet sein. Die HF-Elektrode 5 ist mit einem hier nicht näher dargestellten HF-Generator verbunden, der eine hochfrequente, elektromagnetische Wechselspannung erzeugt, aus der die HF-Elektrode ein hochfrequentes elektromagnetisches Feld, HF, erzeugt und gerichtet abstrahlt. Der Generator erzeugt dabei eine Wechselspannung mit einer Frequenz im Bereich von 1 bis 100 MHz, insbesondere von 10 bis 50 MHz, mit besonderem Vorteil von 20 bis 35 MHz.

Die HF-Elektrode 5 kann relativ zu der Oberfläche des Verbundelements in einer Verfahrrichtung V verfahren werden, so dass sie die gesamte Oberfläche des Verbundelements überstreichen kann. Die HF-Elektrode 5 ist so gebildet, dass sie das HF, jedenfalls mit einem überwiegenden Anteil, senkrecht nach unten und direkt auf die Oberfläche des Verbundelements, genauer der oberen Glasplatte 1, richtet. An einer in Richtung der Verfahrrichtung V weisenden Längsseite kann die HF-Elektrode 5 jedoch eine abgeschrägte Vorderkante 6 aufweisen, über die ein geringer Anteil des hochfrequenten elektromagnetischen Feldes schräg nach vor abgestrahlt wird.

An den Rändern des Verbundelements können, wie in den Figuren 1 und 2 gezeigt, Streufeldelektroden 4 angeordnet sein, die, ebenfalls von dem Generator mit der hochfrequenten Wechselspannung beaufschlagt, ein HF-Streufeld in Richtung der Stirnseiten der Ränder des Verbundelements abstrahlen können.

Für eine Durchführung des erfindungsgemäßen Verfahrens wird nun von der HF-Elektrode 5 ein in der Frequenz auf die durch den dielektrischen Verlustfaktor des Materials der Kunststofffolie 2, bei dem es sich z.B. um Polyvinylbutyral (PVB) handeln kann, bestimmte Resonanzfrequenz möglichst gut angepasstes HF abgestrahlt, das in der eingestellten Energiedichte so bemessen ist, dass es das Kunststoffmaterial der Kunststofffolie 2 soweit erhitzt, dass letztere verdampft. Hierbei kann, wenn sich der dielektrische Verlustfaktor und damit die Absorptionseigenschaften der Kunststofffolie 2 während dieses Prozesses verändern, eine dynamische Frequenzanpassung vorgenommen werden. Die HF-Elektrode 5 wird dann ausgehend von einem Rand des Verbundteils, also von einer Position etwa so wie in den Figuren schematisch dargestellt, in der Verfahrrichtung V über das Verbundelement geführt und zwar so, dass die Kunststofffolie 2 in dem gesamten von der HF-Elektrode 5 überstrichenen Bereich verdampft wird.

Um insbesondere an den Rändern den Prozess des Verdampfens zu befördern, kann über die Streufeldelektroden 4 auf die Randbereiche mit einem hochfrequenten elektromagnetischen Streufeld von passender Frequenz eingewirkt werden, um hier die Kunststofffolie 2 bereits zu erwärmen, ggf. sogar bereits in einem Randbereich zu verdampfen. Über die mögliche angeschrägte Vorderkante 6 der HF-Elektrode 5 kann ein Teil des HF bereits in einen Bereich vor der eigentlichen direkt senkrecht unterhalb der HF-Elektrode 5 gelegenen Einwirkzone eingebracht werden, um dort die Kunststofffolie 2 bereits vorzuerwärmen und so das nachfolgende Erhitzen bis zum Verdampfen zu befördern. Es ist ebenso möglich eine vor die HF-Elektrode 5 geschaltete weitere Elektrode über die Oberfläche des Verbundelements zu führen, die z.B. ein hochfrequentes elektromagnetisches Streufeld erzeugt, das für eine Vorerwärmung des Kunststoffs sorgt, und der die HF-Elektrode 5 nachfolgt und dann ein Verdampfen des Kunststoffs bewirkt.

Austretende Gase der verdampften Kunststofffolie 2 können insbesondere mittels einer nicht näher gezeigten Absaugung aufgefangen und in einer nachfolgenden Nachbehandlung unschädlich gemacht oder für eine weitere Nutzung der in dem Gas geführten Chemikalien aufbereitet werden. Auch kann für eine Kühlwirkung das Verbundelement in einem Wasserbad in der Einfassung 3 angeordnet sein, wobei die vorstehend beschriebene Behandlung in dem Wasserbad stattfindet. Das Wasser eines solchen Bades ist dann mit Vorteil deionisiert und wird während des Prozesses laufend gereinigt, um durch den verdampfenden Kunststoff der Kunststofffolie 2 eingebrachte Verunreinigungen zu entfernen, bevor sich diese auf der Oberfläche der Glasscheiben 1 absetzen.

Wenn die HF-Elektrode 5 die gesamte Oberfläche des Verbundelementes überstrichen hat und dadurch die gesamte Kunststofffolie 2 verdampft ist, sind die Glasscheiben 1 separiert und können einem weitergehenden Recycling zugeführt werden. Falls erforderlich, wenn nämlich die Glasscheiben 1 nach dem Verdampfen der Kunststofffolie 2 noch aneinanderhaften, kann eine Trennung mittels eines Keilelementes, z.B. einer Klinge, oder mittels eines Wasserstrahls oder auf eine andere Weise vorgenommen werden. Auch können die so abgetrennten Glasscheiben 1 noch einmal einer abschließenden Oberflächenreinigung unterzogen werden, z.B. mittels eines Hochdruckwasserstrahls oder mittels Waschens, auch mit einem Lösungsmittel zum Entfernen etwaiger Kunststoffreste oder anderer Zersetzungsrückstände und sonstiger Verunreinigungen.

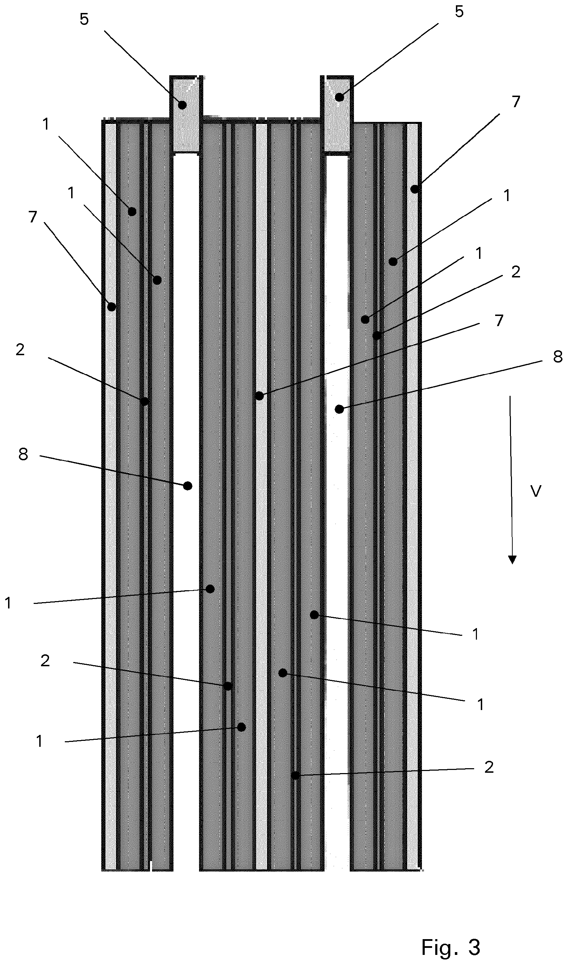

In der Figur 3 ist eine alternative Anordnung von scheibenförmigen Verbundelementen gezeigt, bei denen mit einem erfindungsgemäßen Glasscheiben 1 von Kunststofffolien 2 getrennt werden sollen. Hier werden aufrechtstehend mehrere, in der Figur gezeigt vier, solche scheibenförmigen Verbundelemente jeweils unter Belassung eines Zwischenraums 8 nebeneinander aufgereiht, so dass die Verbundelemente parallel zueinander ausgerichtet sind. In den Zwischenräumen sind nun jeweils HF-Elektroden 5 angeordnet, die zum Abstrahlen eines hochfrequenten elektromagnetischen Feldes jeweils in beide Seitenrichtungen und mithin in Richtung der Oberflächen der jeweils angrenzenden Glasscheiben 1 ausgerichtet sind. Die beiden HF-Elektroden 5 sind vorzugsweise gemeinsam an einen Generator angeschlossen, der diese Elektroden mit der hochfrequenten Wechselspannung beaufschlagt. Als Gegenelektroden und zur Abschirmung sind auf den den HF-Elektroden 5 gegenüberliegenden Seiten der scheibenförmigen Verbundelemente jeweils plattenförmige Masseelektroden 7 angeordnet. Für die Durchführung des Verfahrens wird nun eine Relativbewegung der beide HF-Elektroden 5 in Relation zu den Verbundelementen in der Verfahrrichtung V initiiert, so dass in einem Durchgang vier Verbundelemente bearbeitet werden können und für diese eine Abtrennung der Glasscheiben 1 erreicht werden kann. Dies führt zu einem höheren Durchsatz und mithin zu einer besseren Effizienz des Verfahrens. Für eine weitere Effizienzsteigerung können auch noch zwei weitere HF-Elektroden 5 auf der gegenüberliegenden Seite der Zwischenräume 8 angeordnet werden und können entgegen der Verfahrrichtung V bewegt werden. So kann die Behandlung der Verbundelemente und Abtrennung der Glasscheiben 1 in der halben Zeit erfolgen.

Auch hier können die Verbundelemente während der Durchführung des Verfahrens in einem Wasserbad, insbesondere mit deionisiertem Wasser gelagert werden.

Die Wirkweise der Trennung durch Verdampfen der Kunststofffolie vermittels des hochfrequenten elektromagnetischen Feldes ist auch in einer Durchführung des Verfahrens in einer wie in Figur 3 gezeigten Anordnung gleich wie vorstehend zu den Figuren 1 und 2 erläutert. Auch gelten hier die Ausführungen für ein nachgelagertes finales Trennen der Glasscheiben 1, wie sie vorstehend gegeben sind, analog.

Es ist weiterhin möglich in einer Anordnung analog zu der in Figur 3 gezeigten Anordnung noch weitere Verbundelemente aufzustellen und eine oder mehrere weitere HF-Elektroden 5 in den dann gebildeten Zwischenräumen vorzusehen. So können noch mehr Verbundelemente in einem Durchgang bearbeitet werden und kann noch wirtschaftlicher gearbeitet werden.

Der wesentliche Vorteil der Erfindung wird auch hier noch einmal deutlich. Er liegt insbesondere darin, dass die Glasscheiben 1 als Ganzes, d.h. ohne ein erforderliches Zerkleinern, bzw. Brechen, abgetrennt werden können. Dies führt dazu, dass Verunreinigungen im Trennprozess sich schlechter auf den Glaselementen absetzten können, wobei etwaige noch verbleibende Verunreinigungen von den als Glasscheiben 1 erhaltenen Glaselementen zudem sehr leicht zu entfernen sind. Auch ein anschließendes Handling des zurückgewonnenen Glases bis zu einer Wiederverwertung im Recycling kann so vereinfacht werden.

### Bezugszeichenliste

- 1: Glasscheibe
- 2: Kunststofffolie
- 3: Einfassung
- 4: Streufeldelektrode
- 5: HF-Elektrode
- 6: angeschrägte Vorderkante
- 7: Masseelektrode
- 8: Zwischenraum

- V: Verfahrrichtung

## Patentansprüche

1. Verfahren zum Separieren von in scheibenförmigen Elementen verbundenen Lagen aus Glas (1) und Kunststoff (2), **dadurch gekennzeichnet, dass** mittels einer gegenüber einer Glasoberfläche eines scheibenförmigen Elements mit darin verbundenen, zu separierenden Lagen aus Glas (1) und Kunststoff (2) angeordneten, leisten-, stab- oder balkenförmigen Elektrode (5) ein hochfrequentes elektromagnetisches Feld (HF) in Richtung des scheibenförmigen Elements abgestrahlt wird und dass die Elektrode (5) und das scheibenförmige Element mit zu separierenden Lagen aus Glas (1) und Kunststoff (2) in einer solche Weise in einer Verfahrrichtung (V) relativ zueinander bewegt werden, dass die Oberfläche einer flächigen Seite des scheibenförmigen Elements von dem hochfrequenten elektromagnetischen Feld in der Verfahrrichtung (V) während der ausgeführten Relativbewegung zwischen der Elektrode (5) und dem scheibenförmigen Element überstrichen wird, wobei das hochfrequente elektromagnetische Feld hinsichtlich der Frequenz und Energiedichte derart gewählt ist, dass von dem hochfrequenten elektromagnetischen Feld getragene Energie in einer Kunststofflage (2) des scheibenförmigen Elements in Wärme umgesetzt wird und den Kunststoff in dieser Lage erhitzt und verdampft.

2. Verfahren nach Anspruch 1, **dadurch gekennzeichnet, dass** mit der Elektrode (5) ein hochfrequentes elektromagnetisches Feld mit einer Frequenz im Bereich von 10 bis 50 MHz, insbesondere im Bereich von 20 bis 35 MHz, abgestrahlt wird.

3. Verfahren nach einem der vorhergehenden Ansprüche, **dadurch gekennzeichnet, dass** mit der Elektrode (5) ein hochfrequentes elektromagnetisches Feld mit einer Energiedichte von 5 bis 20 kW/cm², insbesondere im Bereich von 10 bis 15 kW/cm², abgestrahlt wird.

4. Verfahren nach einem der vorhergehenden Ansprüche, **dadurch gekennzeichnet, dass** die Elektrode (5) eine Länge aufweist, die mindestens einer quer, insbesondere senkrecht, zu der Relativbewegung verlaufenden Breite des scheibenförmigen Elements entspricht oder diese Breite übersteigt.

5. Verfahren nach einem der vorhergehenden Ansprüche, **dadurch gekennzeichnet, dass** die Relativbewegung zwischen der Elektrode (5) und dem scheibenförmigen Element ausgehend von einem Rand des scheibenförmigen Elements beginnt.

6. Verfahren nach einem der vorhergehenden Ansprüche, **dadurch gekennzeichnet, dass** das Kunststoffstoffmaterial vor dem Einwirken mit dem hochfrequenten elektromagnetischen Feld temperiert wird.

7. Verfahren nach einem der vorhergehenden Ansprüche, **dadurch gekennzeichnet, dass** eine dynamische Frequenzanpassung des von der Elektrode (5) abgestrahlten hochfrequenten elektromagnetischen Felds derart vorgenommen wird, dass die von dem hochfrequenten elektromagnetischen Feld getragene Energie in dem dem hochfrequenten elektromagnetischen Feld ausgesetzten Kunststoff effizient in Wärme umgesetzt wird.

8. Verfahren nach einem der vorhergehenden Ansprüche, **dadurch gekennzeichnet, dass** der verdampfte Kunststoff abgesaugt wird.

9. Verfahren nach einem der vorhergehenden Ansprüche, **dadurch gekennzeichnet, dass** das scheibenförmige Element während der Durchführung des Verfahrens temperiert wird.

10. Verfahren nach einem der vorhergehenden Ansprüche, **dadurch gekennzeichnet, dass** das scheibenförmige Element während des Einwirkens des hochfrequenten elektromagnetischen Feldes zum Verdampfen der Kunststofflage (2) in einem Wasserbad, insbesondere aus deionisiertem Wasser, gelagert ist.

11. Verfahren nach einem der vorhergehenden Ansprüche, **dadurch gekennzeichnet, dass** das scheibenförmige Element ein Element mit wenigstens zwei Lagen aus Glas (1) und wenigstens einer zwischen den beiden Lagen aus Glas (1) angeordneten Lage aus Kunststoff (2) ist oder dass das scheibenförmige Element ein Element mit einer Stützlage aus einem Metall und einer Lage aus Glas und wenigstens einer zwischen der Stützlage und der Lage aus Glas angeordneten Lage aus Kunststoff ist.

12. Vorrichtung zum Durchführen eines Verfahrens nach einem der vorhergehenden Ansprüche mit einer Auflage für ein scheibenförmiges Element mit zu separierenden Lagen aus Glas (1) und Kunststoff (2), einer leisten-, stab- oder balkenförmigen Elektrode (5) zum Abstrahlen eines hochfrequenten elektromagnetischen Felds (HF), einem an die Elektrode (5) angeschlossenen Generator zum Erzeugen einer hochfrequenten Wechselspannung, sowie mit einer antreibbaren Einrichtung zum relativen Bewegen der Auflage und der Elektrode (5) zueinander in einer quer, insbesondere senkrecht, zu einer Längserstreckung der Elektrode (5) verlaufenden Verfahrrichtung (V).

## Geänderte Patentansprüche

### Geänderte Patentansprüche gemäss Regel 137(2) EPÜ.

1. Verfahren zum Separieren von in scheibenförmigen Elementen verbundenen Lagen aus Glas (1) und Kunststoff (2), wobei mittels einer gegenüber einer Glasoberfläche eines scheibenförmigen Elements mit darin verbundenen, zu separierenden Lagen aus Glas (1) und Kunststoff (2) angeordneten, leisten-, stab- oder balkenförmigen Elektrode (5) ein hochfrequentes elektromagnetisches Feld (HF) in Richtung des scheibenförmigen Elements abgestrahlt wird und dass die Elektrode (5) und das scheibenförmige Element mit zu separierenden Lagen aus Glas (1) und Kunststoff (2) in einer solche Weise in einer Verfahrrichtung (V) relativ zueinander bewegt werden, dass die Oberfläche einer flächigen Seite des scheibenförmigen Elements von dem hochfrequenten elektromagnetischen Feld in der Verfahrrichtung (V) während der ausgeführten Relativbewegung zwischen der Elektrode (5) und dem scheibenförmigen Element überstrichen wird, **dadurch gekennzeichnet, dass** das hochfrequente elektromagnetische Feld hinsichtlich der Frequenz und Energiedichte derart gewählt ist, dass von dem hochfrequenten elektromagnetischen Feld getragene Energie in einer Kunststofflage (2) des scheibenförmigen Elements in Wärme umgesetzt wird und den Kunststoff in dieser Lage erhitzt und verdampft.

2. Verfahren nach Anspruch 1, **dadurch gekennzeichnet, dass** mit der Elektrode (5) ein hochfrequentes elektromagnetisches Feld mit einer Frequenz im Bereich von 10 bis 50 MHz, insbesondere im Bereich von 20 bis 35 MHz, abgestrahlt wird.

3. Verfahren nach einem der vorhergehenden Ansprüche, **dadurch gekennzeichnet, dass** mit der Elektrode (5) ein hochfrequentes elektromagnetisches Feld mit einer Energiedichte von 5 bis 20 kW/cm², insbesondere im Bereich von 10 bis 15 kW/cm², abgestrahlt wird.

4. Verfahren nach einem der vorhergehenden Ansprüche, **dadurch gekennzeichnet, dass** die Elektrode (5) eine Länge aufweist, die mindestens einer quer, insbesondere senkrecht, zu der Relativbewegung verlaufenden Breite des scheibenförmigen Elements entspricht oder diese Breite übersteigt.

5. Verfahren nach einem der vorhergehenden Ansprüche, **dadurch gekennzeichnet, dass** die Relativbewegung zwischen der Elektrode (5) und dem scheibenförmigen Element ausgehend von einem Rand des scheibenförmigen Elements beginnt.

6. Verfahren nach einem der vorhergehenden Ansprüche, **dadurch gekennzeichnet, dass** das Kunststoffstoffmaterial vor dem Einwirken mit dem hochfrequenten elektromagnetischen Feld temperiert wird.

7. Verfahren nach einem der vorhergehenden Ansprüche, **dadurch gekennzeichnet, dass** eine dynamische Frequenzanpassung des von der Elektrode (5) abgestrahlten hochfrequenten elektromagnetischen Felds derart vorgenommen wird, dass die von dem hochfrequenten elektromagnetischen Feld getragene Energie in dem dem hochfrequenten elektromagnetischen Feld ausgesetzten Kunststoff effizient in Wärme umgesetzt wird.

8. Verfahren nach einem der vorhergehenden Ansprüche, **dadurch gekennzeichnet, dass** der verdampfte Kunststoff abgesaugt wird.

9. Verfahren nach einem der vorhergehenden Ansprüche, **dadurch gekennzeichnet, dass** das scheibenförmige Element während der Durchführung des Verfahrens temperiert wird.

10. Verfahren nach einem der vorhergehenden Ansprüche, **dadurch gekennzeichnet, dass** das scheibenförmige Element während des Einwirkens des hochfrequenten elektromagnetischen Feldes zum Verdampfen der Kunststofflage (2) in einem Wasserbad, insbesondere aus deionisiertem Wasser, gelagert ist.

11. Verfahren nach einem der vorhergehenden Ansprüche, **dadurch gekennzeichnet, dass** das scheibenförmige Element ein Element mit wenigstens zwei Lagen aus Glas (1) und wenigstens einer zwischen den beiden Lagen aus Glas (1) angeordneten Lage aus Kunststoff (2) ist oder dass das scheibenförmige Element ein Element mit einer Stützlage aus einem Metall und einer Lage aus Glas und wenigstens einer zwischen der Stützlage und der Lage aus Glas angeordneten Lage aus Kunststoff ist.

12. Vorrichtung zum Durchführen eines Verfahrens nach einem der vorhergehenden Ansprüche mit einer Auflage für ein scheibenförmiges Element mit zu separierenden Lagen aus Glas (1) und Kunststoff (2), einer leisten-, stab- oder balkenförmigen Elektrode (5) zum Abstrahlen eines hochfrequenten elektromagnetischen Felds (HF), einem an die Elektrode (5) angeschlossenen Generator zum Erzeugen einer hochfrequenten Wechselspannung, sowie mit einer antreibbaren Einrichtung zum relativen Bewegen der Auflage und der Elektrode (5) zueinander in einer quer, insbesondere senkrecht, zu einer Längserstreckung der Elektrode (5) verlaufenden Verfahrrichtung (V), **dadurch gekennzeichnet, dass** die Vorrichtung eine in einer Anpassung zwischen Elektrode (5) und Generator angeordnete, für eine dynamische Frequenzanpassung angetrieben automatisch verstellbare Kapazität aufweist.
